# EUROPEAN PATENT APPLICATION

(11) **EP 4 235 528 A1**
(43) Date of publication of application: **30.08.2023**
(21) Application number: 22425007.6
(22) Date of filing: 23.02.2022
(51) Int. Cl.: G06Q 10/00

(54) **METHOD FOR MANAGING A COMPETITION, EXAMINATION AND/OR SELECTION OF PERSONNEL AND SYSTEM THEREOF**

(71) Applicant: Valente, Adriano, 66023 Francavilla al Mare, (CH) (IT); del Carmine, Bruno, 66054 Vasto (CH) (IT)
(72) Inventor: Valente, Adriano, I-66023 Francavilla al Mare, CHIETI (IT); Del Carmine, Bruno, I-66054 Vasto, CHIETI (IT)
(74) Representative: Mozzi, Matteo

(57) **Abstract**

A method (200) and a related system for managing a competition, examination and/or selection of personnel test, comprising steps adapted to allow preparing, performing and closing recruitment tests (for example, public competitions and other personnel selections) by using equipment, software and IT protocols, which ensure the security of the performance of the examinations (by using an unlock code, a private key associated with a public key for each candidate), the secrecy and certainty of the data processed, helping to speed up the operations relating to the competition, examination and/or selection of personnel.

## Description

### . Field of the invention

**.** The present invention relates to a method for managing a competition, examination and/or selection of personnel test and system thereof.

### . Background art

**.** For the purposes of the present description, "competition, examination and/or selection of personnel test" means a public or private recruitment test, or simply a public or private recruitment competition, an examination for the qualification to a profession and/or registration in a professional register, the external or internal selection of personnel by private parties, the issuing of notices, the assignment of tasks, and so on.

**.** Nowadays, anyone of the tests listed above, for example a public or private competition, is conventionally performed in paper format.

. Such a performance manner, also considering the high number of candidates who take part in certain types of competitions, some even performed in several different locations, requires a rather onerous management, starting from the consultation of the registration applications up to the performance of the examination and the subsequent correction of the exams performed by the candidates, for the definition of a ranking.

**.** Such a management is not free from defects.

**.** As is well known, in fact, management mainly in paper format, in addition to inevitably requiring long times and being subject to any possible errors, does not ensure, on the one hand, the secrecy of the data processed, as required by the current legislation, and, on the other hand, the adequate transparency and regularity of the competition itself, which inevitably remains exposed to possible attempts at irregularities, such as the replacement of documentation, for example, which make the conduct of the public or private competition unsecure and unreliable.

**.** In addition, in the case of public or private competitions held on multiple locations, it is necessary to ensure the simultaneity of the performance of the examination, so as to avoid possible irregularities due to the lack of a prompt coordination between the various locations.

### . Summary of the invention

**.** It is the object of the present invention to devise and provide a method for managing a competition, examination and/or selection of personnel test which allows at least partially obviating the drawbacks mentioned above with reference to the prior art and which, in particular, allows for faster management times while ensuring an adequate level of transparency, regularity, security and prompt coordination, if required by the circumstances.

**.** Such an object is achieved by a method according to claim 1.

**.** The present invention also relates to a system for managing a competition, examination and/or selection of personnel test.

### . Brief description of the drawings

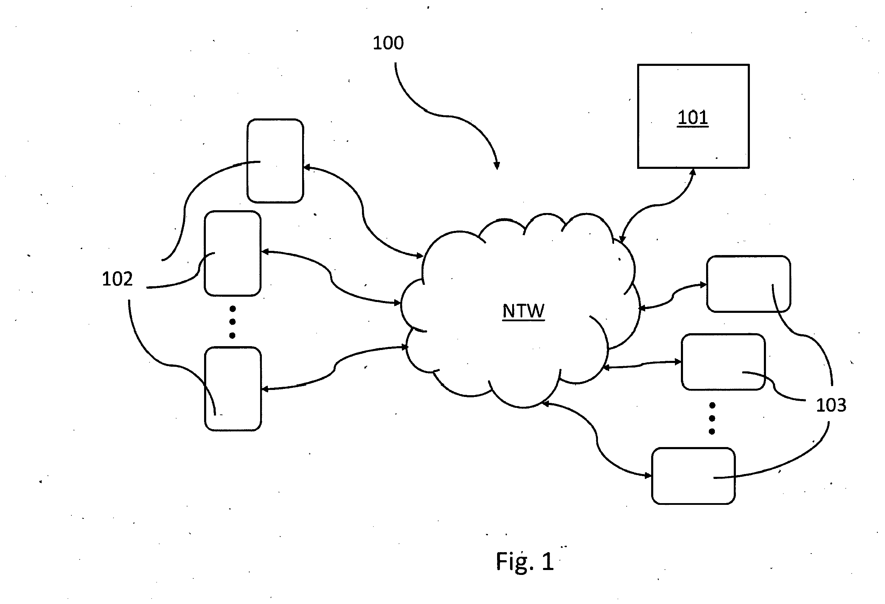

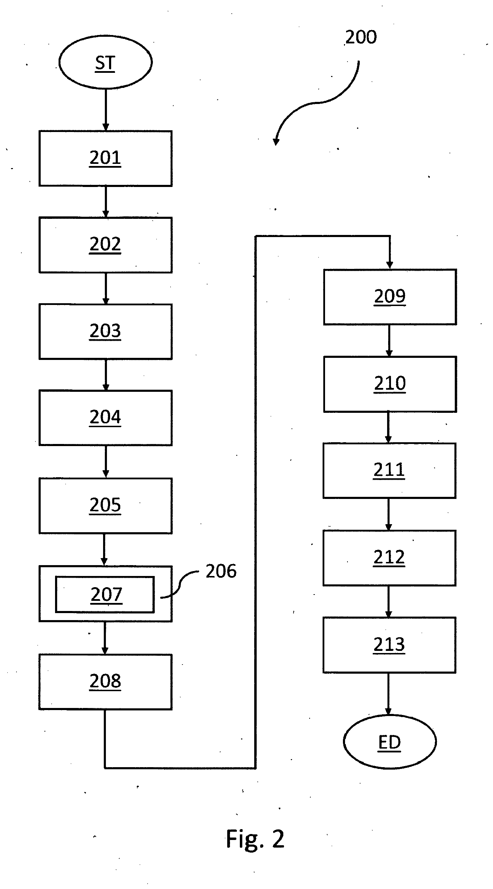

**.** Further features and advantages of the method and the related system according to the invention will be apparent from the following description of preferred embodiments, given by way of indicative, non-limiting examples, with reference to the accompanying Figures, in which:
**.** - Figure 1 diagrammatically shows a system for managing a competition, examination and/or selection of personnel test in accordance with an embodiment of the present invention;
**.** - Figure 2 diagrammatically shows, by means of a block diagram, a method for managing a competition, examination and/or selection of personnel test in accordance with an embodiment of the invention.

### . Detailed description of the invention

**.** With reference to the aforesaid Figures, reference numeral 100 indicates as a whole a system for managing a competition, examination and/or selection of personnel test, hereinafter also simply referred to as a system, according to the invention.

**.** It is worth noting that equal or similar elements in the Figures are indicated by the same reference numerals and/or alphanumeric references.

**.** For the purposes of the present description, "competition, examination and/or selection of personnel test" means a public or private recruitment test, or simply a public or private recruitment competition, an examination for the qualification to a profession and/or registration in a professional register, the external or internal selection of personnel by private parties, the issuing of notices, the assignment of tasks, and so on.

**.** According to an embodiment, shown in Figure 1, the system 100 comprises at least one first management computer 101.

. The at least one first management computer 101 is configured, by means of a specific software or program code created as a web or a desktop application referred to as a back-office management application, for example, to allow the management of the first operations of the competition, examination and/or selection of personnel test, prior to the performance of the actual (written and/or oral) test.

**.** "First operations of the competition, examination and/or selection of personnel test prior to the performance of the test" means one or more operations, including, for example:
- the indiction of the competition, examination and/or selection of personnel test;
- the announcement relating to the competition, examination and/or selection of personnel test;
- the convocation and appointment of the Selection Board for the competition, examination and/or selection of personnel test;
- the admission of the candidates to the competition, examination and/or selection of personnel test;
- the invitation to the competition, examination and/or selection of personnel test;
- the evaluation of the qualifications held by each candidate and the attribution of a related score;
- the preparation of the test (written and/or oral) to be performed.

**.** Going into detail, through the back-office management application, through the web or a software application, the at least one first management computer 101 is configured to allow the assigned personnel to identify and select the characterizing elements of the competition, examination and/or selection of personnel test to be published.

**.** One or more of such characterizing elements are, for example:
- number and categorization of places made available by the competition, examination and/or selection of personnel test (for example, no. 2 places; profile: professional health worker - obstetrician; category: D). It should be noted that such a categorization is selectable from master data already loaded in the at least one first management computer 101 of the system 100, with the possibility, still, of creating new ones or modifying existing ones;
- type of contract proposed (for example, a permanent contract, a fixed-term contract, and so on);
- type of competition, examination and/or selection of personnel test (public competition, private competition, national exam, qualification exam to exercise a profession, qualification exam for the registration in a professional register, public recruitment, role in complex structures, and so on);
- places for the assignment of the winners of the competition, examination and/or selection of personnel test;
- seat reservations;
- admission requirements: citizenship, physical suitability for the role, skills and specific qualifications for the position offered (for example, specialist degree, registration in a professional register). It should be noted that the at least one first management computer 101 of the system 100 has already stored the personal data related to the skills and qualifications associated with the categorization of the previously selected position offered, thus allowing the assigned personnel to associate them with the competition, examination and/or selection of personnel test of the selection process;
- candidate admission/exclusion clauses;
- examination/s: pre-selection, description of written, oral and/or practical tests, exam topics, examination schedule;
- scores attributed to qualifications and examinations;
- rules for approval, use and validity of the ranking;
- other clauses.

**.** Going into detail, as for the announcement of the competition, examination and/or selection of personnel test, the at least one first management computer 101, through the back-office management application, is configured to automatically announce a competition, examination and/or selection of personnel test (for example, a public competition) based on data previously entered and stored in the at least one first management computer 101 by using a plurality of predefined data-entry templates/forms.

. It should be noted that such data advantageously guide the staff in charge of the announcement.

**.** It should also be noted that the plurality of predefined templates/forms can be entered and modified in advance in the at least one first management computer 101 by users authorized to perform such a function.

**.** In addition, the at least one first management computer 101 is configured to allow the traceability of the publication systems of the announcement itself (for example, the publication in the Official Gazette, publication on the institutional website of the Body and so on).

**.** Entering now, instead, into the details of the convocation and the appointment of the Selection Board for the competition, examination and/or selection of personnel test, the at least one first management computer 101 is configured to track the personal data of experts called to be part of the Selection Board and the possible acceptance of the role by them.

**.** Furthermore, the at least one first management computer 101 is configured to provide the Board Appointment function and to create access accounts of the Commissioner type for the members of the Selection Board in relation to the specific competition, examination and/or selection of personnel test.

**.** Instead, as for the admission of candidates to the competition, examination and/or selection of personnel test, the at least one first management computer 101 is configured, through the back-office management application, to allow members of the Selection Board to view the applications received, assess the possession of the requirements requested in the announcement and choose the admission or exclusion of the candidate to or from the competition, examination and/or selection of personnel test in progress.

. Instead, as for the invitation to the competition, examination and/or selection of personnel test, the at least one first management computer 101 is configured, through the back-office management application, to allow the members of the Selection Board to evaluate the qualifications held by each candidate, based on the provisions of the Announcement, and the attribution of a related score.

. In this regard, the at least one first management computer 101 is configured, through the back-office management application, to send to the candidates who meet all the requirements set out in the announcement a confirmation of participation in the competition, examination and/or selection of personnel test through push notifications, SMS notifications, e-mail notifications, for example.

. In greater detail, the at least one first management computer 101 is configured, through the back-office management application, to send to the candidates who meet all the requirements set out in the announcement a confirmation of participation in competition, examination and/or selection of personnel test, an invitation identification code which the candidate will have to present on the day of participation in the examinations.

. The invitation identification code can be a security code of the OTP (One Time Password) type, a code of the QR (Quick Response) type, a code of the barcode type, and so on.

. As for the preparation of the examinations, the at least one first management computer 101 is configured, through the back-office management application, to allow the members of a Competitive Exam Commission, which can differ from the Selection Board, to:
- define the schedules of the examinations;
- communicate with the candidates, through push notifications, SMS notifications, e-mail notifications, for example;
- prepare questions, tests, queries, practical tests for the examinations.

. In this regard, it should be noted that the at least one first management computer 101 is advantageously configured, through the back-office management application, to allow multiple users of the Selection Board and/or of the Competitive Exam Commission to work simultaneously on the same resource without interfering with one another (Collaboration).

. In particular, the at least one first management computer 101 is configured, through the back-office management application, to view who else is working on a resource and view the changes made by other users.

. In fact, the at least one first management computer 101 is configured, through the back-office management application, to update a resource with the changes saved by the others after the last saving.

. It should also be noted that the at least one first management computer 101 is configured, by means of a specific software or program code created as a web or a desktop application referred to as a back-office management application, for example, to allow the management of second operations of the competition, examination and/or selection of personnel test, starting from the performance of the (written and/or oral) examination.

. The second operations of the competition, examination and/or selection of personnel test will be described below.

. With reference again to the embodiment in Figure 1, the system 100 further comprises a first plurality of electronic devices 102, each being associable with a user, operatively connected to the at least one first management computer 101.

. The first plurality of electronic devices 102 is operatively connected to the at least one first management computer 101 through a data communication network NTW, for example the Internet, with related security communication protocols, such as the TLS (Transport Layer Security) protocol, for example, and subsequent additions, such as the STARTTSL protocol (evolution of TLS) or the "HTTP over TLS" protocol, also known as HTTPS (HyperText Transfer Protocol over Secure Socket Layer), for example.

. In greater detail, the first plurality of electronic devices 102 comprises smartphones, tablets, notebooks, personal computers, and so on, for example, operatively connected to the data communication network NTW in the wireless mode of in the wired mode, with related security communication protocols, such as the TLS (Transport Layer Security) protocol, for example, and subsequent additions, such as the STARTTSL protocol (evolution of TLS) or the "HTTP over TLS" protocol, also known as HTTPS (HyperText Transfer Protocol over Secure Socket Layer), for example.

. Each electronic device of the first plurality of electronic devices 102 is configured, by using a respective software or program code, to allow a user to manage operations aimed at presenting an application of the user to one or more possibly available recruitment tests.

. It should be noted that such a software or program code, in an embodiment, can be a software application, also referred to as a user application, which is downloadable on an electronic device of the first plurality of electronic devices 102 or, in a further alternative embodiment, it can be a user web portal which is accessible from the browser of the electronic device of the first plurality of electronic devices 102.

. With reference again to the aforesaid operations aimed at the application of a user to one or more recruitment tests, which can be performed by the user, for example by means of the user application which is loadable onto the respective electronic device, they comprise for example:
- the prior registration of a user to the system 100 to take advantage of the functions offered by the system 100, by entering data representative of the profile of the user, stored in the at least one first management computer 101, such as, for example: personal data, contact details, curriculum vitae, educational qualifications, scientific publications and qualifications, career qualifications and so on;
- uploading and/or sending attached documents in digital format to the at least one first management computer 101;
- sending, by the previously registered user, the application in digital format to the at least one first management computer 101, for the participation in one or more recruitment tests chosen from among those open, the announcements of which can be viewed, again through the user application, for example, by using, for this purpose, the representative data of the profile of the user previously stored in the at least one first management computer 101 (personal data, qualifications, curriculum vitae, and so on), possibly completing them and/or updating them, choosing whether to update the profile accordingly, or to insert representative data of the profile and documents in digital format to be associated only with the application being made (e.g., declaration of possession of specific requirements or qualifications required by the open announcement of a set competition, examination and/or selection of personnel test;
- sending to the at least one first management computer 101 documents in digital format to be attached to the application.

**.** It should be noted that, following the conclusion of the application procedure, the electronic device of the user through the user application, for example, is configured to receive, by the at least one first management computer 101 of the system 100, notifications with the details of the application and the summary of what has been entered. Examples of such notifications are push notifications, SMS notifications, e-mail notifications, and so on.

**.** Each electronic device of the first plurality of electronic devices 102 is also configured, through the user application, for example, to allow a user to view and possibly print a summary of the applications forwarded to the at least one first management computer 101.

**.** It should be noted that the operations which can be performed by the user by means of the user application can also be performed through the user web portal.

**.** With reference again to the embodiment in Figure 1, the system 100 further comprises a second plurality of electronic devices 103, each being associable with a candidate participating in the examinations, operatively connected to the at least one first management computer 101.

**.** The second plurality of electronic devices 103 is operatively connected to the at least one first management computer 101 through the data communication network NTW, with related security communication protocols, such as the TLS (Transport Layer Security) protocol, for example, and subsequent additions, such as the STARTTSL protocol (evolution of TLS) or the "HTTP over TLS" protocol, also known as HTTPS (HyperText Transfer Protocol over Secure Socket Layer), for example.

. In greater detail, the second plurality of electronic devices 103 comprises smartphones, tablets, notebooks, personal computers, and so on, for example.

. Each electronic device of said second plurality of electronic devices 103 is associated with a respective SIM (Subscriber Identity Module) card to be operatively connected to the data communication network NTW.

. The connection between each electronic device of said second plurality of electronic devices 103 and the data communication network NTW occurs, through the respective SIM card, preferably in wireless mode, with related security communication protocols, such as the TLS (Transport Layer Security) protocol, for example, and subsequent additions, such as the STARTTSL protocol (evolution of TLS) or the "HTTP over TLS" protocol, also known as HTTPS (HyperText Transfer Protocol over Secure Socket Layer), for example.

. In greater detail, each electronic device of said second plurality of electronic devices 103 is configured, through the respective SIM card, to generate a data communication logic layer of a private network in the data communication network NTW allowing a transmission of encrypted data by using a dedicated access point of the private type.

. Therefore, with this configuration, an encrypted data transmission is advantageously ensured, both at the data level as well as at the transport level.

. Furthermore, it should be noted that the at least one first management computer 101 is configured to request from each mobile phone operator a respective data communication signal within the location where the examination is held so as to assess the quality of the coverage of each mobile phone operator.

. Such a request is preferably obtained by receiving a respective call from each mobile phone operator through a program code of the API (Application Programming Interface) type.

. Therefore, the at least one first management computer 101 is configured to detect a plurality of data communication signals, each made available by a mobile phone operator.

. The at least one first management computer 101 is further configured to select, within the plurality of data communication signals received, the data communication signals having a set level of coverage adapted to ensure a suitable level of data communication.

. The at least one first management computer 101 is configured to assign to the electronic devices of said second plurality of electronic devices 103 the mobile phone operators having the data communication signals selected by distributing them among them.

. Each electronic device of the second plurality of electronic devices 103 is configured, through the respective SIM card, to operatively connect to the at least one first management computer 101, through the data communication network NTW, using the data communication signal of the mobile phone operator assigned by the at least one first management computer 101.

. Therefore, the use of such a SIM card in each electronic device of the second plurality of electronic devices 103 advantageously allows increasing the data transmission security with respect to a normal data communication network of the Internet type, substantially reducing to zero the risks due to the activation of a data connection since it is always active, increasing the stability and reliability of the entire system 100, allowing the use in the system 100 of an unlimited number of electronic devices of said second plurality of electronic devices 103 and thus activating an unlimited number of participants in the same place.

. In greater detail, wherever the examination is held, it is not necessary to create a network (Lan or wi-fi) for the connection of the electronic devices of said second plurality of devices 103.

. Furthermore, no cable to be wired is required, nor a fixed access point to the pre-existing data communication network at the site where the test is held.

. Each electronic device of said second plurality of electronic devices 103 is configured to be connected to the data communication network NTW through a "plug & play" connection in any site where a test, in which at least one data communication signal of a mobile phone operator exists, is held.

. The selection of the data communication signal, among those available, with the best quality, or having a set level of coverage adapted to ensure a suitable level of data communication, avoids the saturation of mobile phone cells.

. In fact, the at least one first management computer 101 is configured to distribute in a smart manner the electronic devices of the second plurality of electronic devices 103 among the mobile phone operators present, adapted to ensure the set level of coverage adapted to ensure a suitable level of data communication.

. Finally, in case of a disruption by a first mobile phone operator, the at least one first management computer 101 is configured to assign, in a smart manner, the electronic devices of said second plurality of electronic devices 103, previously assigned a first mobile phone operator, to a second mobile phone operator available.

. Therefore, additional costs for creating network back-ups are avoidable.

. With reference again to the system 100 in accordance with the present invention, each electronic device of the second plurality of electronic devices 103 is configured, by using a respective software or program code, to allow a candidate to perform examinations relating to the competition, examination and/or selection of personnel test for which the candidate has been selected.

. It should be noted that such a software or program code, in an embodiment, can be a software application, also referred to as examination performance application, with which each electronic device of the second plurality of electronic devices 103 has been previously provided.

. In greater detail, each electronic device of the second plurality of electronic devices 103 is configured, through the examination performance application, to perform the following functions..

. First of all, the electronic device of the second plurality of electronic devices 103 (during a so-called, check-in step) is configured to scan the invitation identification code presented by a candidate and received by the candidate him/herself at the time of confirmation of participation in the competition, examination and/or selection of personnel test, received from the at least one first management computer 101.

. The identification code for the invitation can be scanned by the scanning device of the electronic device, for example the integrated camera, by taking advantage of the functions of the examination performance application.

. The electronic device of the second plurality of electronic devices 103 is configured to send the scanned invitation identification code to the at least one management computer 101 for a check against the data stored therein.

. In this regard, the at least one first management computer 101 is configured, in case of a positive outcome of the check of the received invitation identification code, to establish a unique pairing between the electronic device with which the identification code for the invitation of the candidate was scanned and the candidate him/herself.

. In this regard, the at least one first management computer 101 is configured to generate a private encryption key for each selected candidate.

. In greater detail, the at least one first management computer 101 is also configured to insert in the private encryption key, for a selected candidate, one or more of:
- a first identification code of the electronic device of said second plurality of electronic devices 103 associated with the selected candidate;
- a second identification code of the SIM card of the electronic device of said second plurality of electronic devices 103 associated with the selected candidate;
- a third identification code of an examination assigned to the selected candidate;
- a fourth identification code of an electronic envelope assigned to the selected candidate.

. Thereby, the anonymity of the selected candidate is ensured.

**.** Furthermore, the at least one first management computer 101 is configured to generate a respective public encryption key to be used to decrypt (decipher) transmitted data packets encrypted with a private encryption key generated for each selected candidate.

**.** The at least one first management computer 101 is further configured to assign the candidate, in a random manner, a station number in which to perform the examinations.

**.** The electronic device of the second plurality of electronic devices 103, assigned to the candidate, is configured to allow the candidate to perform the examinations following the insertion, through the examination performance application, of a related unlock code (for example, an alphanumeric code).

**.** In this regard, the at least one first management computer 101 is configured to provide the unlock code for the electronic devices of the second plurality of electronic devices 103 associated with the selected candidates.

**.** In greater detail, the at least, one first management computer 101 is configured to provide the Selection Board with the unlock code to be communicated to the candidates, to be inserted, through the examination performance application, in the electronic device assigned to the second plurality of electronic devices 103 to enable the use thereof for the performance of the written examinations.

**.** In addition, the at least one first management computer 101 is configured to randomly select one of the available examinations and to communicate this information to all the electronic devices assigned to the candidates of the second plurality of electronic devices 103.

**.** Furthermore, in an embodiment, in conjunction with the previous one, the at least one first management computer 101 is configured to send a plurality of queries of the selected examination, distributed following a different order for each electronic device of the electronic devices assigned to the candidates of the second plurality of electronic devices 103.

**.** Thereby, with a different order of queries in the examination, an additional feature is possible, adapted to reduce the possibility that nearby candidates can copy during the course of the exam.

**.** In this regard, each electronic device of the second plurality of electronic devices 103 is configured to enable, following the insertion of the unlock code by the candidate, the performance of the examination communicated by the at least one first management computer 101.

**.** Each electronic device of the second plurality of electronic devices 103 is configured to allow the respective candidate, through the examination performance application, to perform the examination communicated by the at least one first management computer 101 and unlocked with the insertion of the respective unlock code communicated.

**.** It should be noted that the examination is preferably a multiple-choice questionnaire so that it is easily usable by the candidate with the supplied electronic device such as a tablet, for example.

**.** In an embodiment, each candidate, at the time of the delivery of the respective electronic device, can be provided with a further candidate identification data.

**.** During the performance of the examination, each electronic device of the second plurality of electronic devices 103 is configured to detect at regular or irregular time intervals the further identification data of the respective candidate so as to verify the pairing between the electronic device and the candidate.

. Thereby, it is possible to ensure an additional level of regularity to the competition, examination and/or selection of personnel test.

**.** In an embodiment, the further candidate identification data is a code, of the barcode or QR type, for example, present on a device which is wearable by the candidate, for example a bracelet, a pendant, a brooch and so on.

**.** In a further embodiment, the further candidate identification data is a biometric data, for example the eyeball, the fingerprint, which is directly detectable by the electronic device of the second plurality of electronic devices 103 associated with the candidate.

**.** It should be noted that in this embodiment, the verification of the pairing of the further candidate identification data and the electronic device associated with the candidate can also occur during the delivery of the electronic device after the examination is over, so as to verify, even during the delivery step, that the candidate has performed the examination on the electronic device assigned and delivered.

. According to a further embodiment, in conjunction with the previous one, each candidate, at the time of the delivery of the respective electronic device, can be provided with the further candidate identification data (already defined previously) and with an identification code of an assigned seat, both stored in the electronic device delivered.

. At the time of reaching the assigned seat, the candidate can scan a seat identification code (for example, a barcode or a QR code), applied onto the seat, by means of the electronic device delivered belonging to the second plurality of electronic devices 103, which verifies the correspondence between the identification code of the scanned seat and the identification code of a previously stored seat.

. If the correspondence is successful, the electronic device delivered is enabled for the insertion, through the examination performance application, of the unlock code for viewing the examination.

. As in the previous embodiment, during the performance of the examination, each electronic device of the second plurality of electronic devices 103 is configured to detect at regular or irregular time intervals the further identification data of the respective candidate so as to verify the pairing between the electronic device and the candidate, ensuring an additional level of regularity in the competition, examination and/or selection of personnel test.

. It should be noted that in this embodiment, the verification of the pairing of the further candidate identification data and the electronic device associated with the candidate can also occur during the delivery of the electronic device after the examination is over, so as to verify, even during the delivery step, that the candidate has performed the examination on the electronic device assigned and delivered.

. In an embodiment, for performing the examination, an electronic device of the second plurality of electronic devices 103 can be provided, at the request of the candidate or, if necessary for performing the examination, with an optical writing device (for example, an optical pen) which, by virtue of a character recognition system adapted to each type of exam, allows performing the examination as when writing on a sheet of paper.

**.** This technology is especially usable when the use of the keyboard could be an obstacle for some candidates or could be limiting for performing an examination which requires answers which use unconventional characters in a normal keyboard, such as highly specialized examinations in which the creation of a "graphic form" is required as an object of the evaluation, for example, and by virtue of an artificial intelligence developed *ad hoc*, it is able to automatically evaluate the result of the exam.

**.** Therefore, this technology allows performing the examination by a candidate for whom the keyboard is a technological barrier or simply finds it more comfortable to write using a pen instead of using the keyboard.

**.** In an embodiment, each electronic device of the second plurality of electronic devices 103 is configured to allow the respective candidate, once the examination is over, to submit the answers to the examination.

**.** In this regard, each electronic device of the second plurality of electronic devices 103 is configured to send to the at least one first management computer 101 both data representative of the answers to the written examination of the candidate as well as data representative of the validation of the submission of the answers to the examination, i.e., date and time of submission, signature of the candidate, signature of a member of the Competitive Exam Commission, for example.

**.** It should be noted that the submission of the examination occurs after enabling a data transmission by each electronic device of said second plurality of electronic devices 103 towards the at least one first management computer 101 through the private network logic layer being obtainable by using each SIM card with which the electronic device of said second plurality of electronic devices 103 is provided.

**.** If the examination is an oral examination, alternative to or in conjunction with the examination (for example, subsequent), the at least one first management computer 101 is configured to draw the questions to be submitted to a candidate, possibly divided by topic.

**.** It should be noted that some of the operations described above involving the at least one first management computer 101 are part of the second operations of the competition, examination and/or selection of personnel test, starting from the performance of the examination (written and/or oral).

**.** In this regard, the aforesaid second operations also include further operations which can be performed by the at least one first management computer 101, through the back-office management application, such as the correction of the examinations, the closing of the competition, examination and/or selection of personnel test, and the creation of the ranking, for example.

. In greater detail, as for the correction of the examinations, the at least one first management computer 101, through the back-office management application, allows one or more members of the Competitive Exam Commission to correct the examinations.

**.** It should be noted that the at least one first management computer 101 advantageously allows several members of the Competitive Exam Commission to simultaneously correct the same examination, in the case of an open-ended question examination.

**.** Therefore, it is possible to assign the correction of the same open-ended question examination to several members of the Competitive Exam Commission, so as to obtain a plurality of evaluations of the same open-ended question examination.

**.** It should be noted that the at least one first management computer 101 is configured to provide each member of the Competitive Exam Commission with an examination to be corrected, in a non-editable and anonymous format.

. In this case, each member of the Competitive Exam Commission can assign only one evaluation to the corrected examination.

**.** It should be noted that in the case of written closed-ended question examinations, the at least one first management computer 101 is configured, through the back-office management application, to automatically correct the written closed-ended question examinations.

**.** As for the creation of the ranking, the at least one first management computer 101 is configured, through the back-office management application, to assign to each Commissioner of the Competitive Exam Commission, for example through an SMS or certified e-mail notification, an encryption key to be associated with the evaluation of the corrected examination.

**.** If the same examination is corrected by more than one commissioner of the Competitive Exam Commission, the evaluation of the examination will be associated with several coding keys, each assigned by the at least one first management computer 101, for example always through SMS or certified e-mail notifications, to a respective commissioner.

**.** The at least one first management computer 101 is further configured, through the back-office management application, to code the evaluation of each examination based on said one or more coding keys assigned to the respective commissioners, so as to associate the evaluation of the corrected examination with the respective candidate, who had remained anonymous until then, and draw up the related ranking.

**.** It should be noted that the at least one first management computer 101 is configured to obtain, at the end of the correction of each examination, the identity of the candidate who performed the examination using the respective public encryption key, decrypting (deciphering) a data packet received from the electronic device of said plurality of mobile electronic devices 103, previously encrypted with the private encryption key associated with the candidate.

**.** In an embodiment, in conjunction with any one of the previous ones and not shown in the Figures, the system 100 can comprise a plurality of containers, for example bags, each delivered to a candidate after the scanning, by the electronic device of the second plurality of electronic devices 103 (during the so-called check-in step), of the invitation identification code presented by the candidate and received by the candidate him/herself at the time of the confirmation of participation in the competition, examination and/or selection of personnel test received from the at least one first management computer 101.

**.** Each container is adapted to accommodate therein the candidate's personal items which are not usable during the examination.

. Each container is adapted to be hermetically closed to prevent the items contained therein, for example cell phones, from being used.

. In addition, each container is configured to shield any data communication signal present outside the container, to temporarily isolate the items contained therein.

. The use of a container for the personal items according to this embodiment has several advantages.

. The sites where examinations are held conventionally do not need a "safekeeping" space. Therefore, by providing a container of this type, each candidate can keep personal items by, for the duration of the examination, minimizing the risks related to the responsibility for the safekeeping.

. In addition, with a localized isolation technology, the use of the mobile phone during the examination is avoided, without the involvement of security personnel and with an increase in the quality of the results produced by the candidate.

. Since the container (bag) is reusable, the ecological impact deriving from waste is also evidently reduced.

. With reference now also to Figure 2, a method 200 for managing a competition, examination and/or selection of personnel test is now described, hereinafter also simply a method, in accordance with an embodiment of the invention.

. The method 200 comprises a symbolic step of starting ST.

. The method 200 comprises a step of sending 201 to at least one first management computer 101, by a first plurality of candidates, each provided with an electronic device of a first plurality of electronic devices 102, a plurality of applications for a competition, examination and/or selection of personnel test.

. The method 200 comprises a step of selecting 202, by the at least one first management computer 101, a second plurality of candidates suitable for competition, examination and/or selection of personnel test starting from said first plurality of candidates.

. The method 200 further comprises a step of sending 203, by the at least one first management computer 101, to each selected candidate, an identification code for the invitation to the competition, examination and/or selection of personnel test.

**.** The method 200, for each selected candidate, comprises a step of scanning 204 (during a so-called check-in step), by an electronic device of a second plurality of electronic devices 103 being associable with a respective candidate for the performance of examinations, the identification code for the invitation of the selected candidate.

**.** The method 200, for each selected candidate, comprises a step of associating 205, by the at least one first management computer 101, the electronic device of the second plurality of electronic devices 103 used to scan the identification code for the invitation of the selected candidate with the selected candidate him/herself.

**.** The electronic device of the second plurality of electronic devices 103 is configured to perform an examination only following the insertion, by the candidate, of a respective unlock code.

**.** The electronic device of the second plurality of electronic devices 103 is associated with a respective SIM (Subscriber Identity Module) card to be operatively connected to the data communication network NTW.

. Furthermore, it should be noted that the at least one first management computer 101 is configured to request from each mobile phone operator a respective data communication signal within the location where the examination is held so as to assess the quality of the coverage of each mobile phone operator.

**.** Such a request is preferably obtained by receiving a respective call from each mobile phone operator through a program code of the API (Application Programming Interface) type.

**.** Therefore, the at least one first management computer 101 is configured to detect a plurality of data communication signals, each made available by a mobile phone operator.

**.** The at least one first management computer 101 is further configured to select, within the plurality of data communication signals received, the data communication signals having a set level of coverage adapted to ensure a suitable level of data communication.

**.** The at least one first management computer 101 is configured to assign to the electronic devices of said second plurality of electronic devices 103 the mobile phone operators having the data communication signals selected by distributing them among them.

**.** Each electronic device of the second plurality of electronic devices 103 is configured, through the respective SIM card, to operatively connect to the at least one first management computer 101, through the data communication network NTW, using the data communication signal of the mobile phone operator assigned by the at least one first management computer 101.

**.** The advantages of the use of such a SIM card have already been described above.

**.** The method 200 comprises a step of generating 206, by the at least one first management computer 101, a private encryption key for each selected candidate.

**.** In greater detail, the step of generating 206 comprises, for each candidate, a step of inserting 207, by at least one first management computer 101, in the private encryption key generated for a selected candidate, one or more of:
- a first identification code of the electronic device of said second plurality of electronic devices 103 associated with the selected candidate;
- a second identification code of the SIM card of the electronic device of said second plurality of electronic devices 103 associated with the selected candidate;
- a third identification code of an examination assigned to the selected candidate;
- a fourth identification code of an electronic envelope assigned to the selected candidate.

**.** The method 200 further comprises a step of providing 208, by the at least one first management computer 101, an unlock code for the electronic devices of the second plurality of electronic devices 103 associated with the selected candidates.

**.** The method 200 further comprises a step of inserting 209, by each candidate, the unlock code in the assigned electronic device of the second plurality of electronic devices 103.

**.** The method 200 further comprises a step of performing 210, by each candidate, an examination through the respective assigned electronic device of the second plurality of electronic devices 103.

**.** In an embodiment (not shown in the Figures), in conjunction with any one of the previous ones, the method comprises a step of detecting at regular or irregular time intervals, by the respective electronic device of the second plurality of electronic devices 103 assigned to a candidate, a further candidate identification data so as to verify the pairing between the electronic device and the candidate.

**.** Thereby, it is possible to ensure an additional level of regularity to the competition, examination and/or selection of personnel test.

**.** Embodiments of the further candidate identification data have been previously provided.

. In a further embodiment, in conjunction with the previous one, the method 200 further comprises a step of assigning to each candidate, at the time of the delivery of the respective electronic device, the further candidate identification data (already defined previously) and an identification code of an assigned seat, both stored in the electronic device delivered.

**.** At the time of reaching the assigned seat, the method comprises a step of scanning, by the user by means of the electronic device delivered belonging to the second plurality of electronic devices 103, an identification code of the seat (for example, a barcode or a QR code) applied to the seat.

**.** The method comprises a step of checking, by the electronic device delivered belonging to the second plurality of electronic devices 103, the correspondence between the identification code of the scanned seat and the identification code of a previously stored seat.

**.** If the correspondence is successful, the method comprises a step of enabling, by the at least one first management computer 101, the electronic device delivered for the insertion, through the examination performance application, of the unlock code for viewing the examination.

**.** With reference again to Figure 2, the method 200 further comprises a step of submitting 211, by the candidate, through the respective assigned electronic device of the second plurality of electronic devices 103, the examination, providing both data representative of the answers to the written examinations of the candidate in a non-editable format, as well as data representative of the validation of the submission of the answers to the examination.

**.** It should be noted that the step of submitting 211 the examination occurs after enabling a data transmission by each electronic device of said second plurality of electronic devices 103 towards the at least one first management computer 101 through the private network logic layer which is obtainable by using each SIM card with which the electronic device of said second plurality of electronic devices 103 is provided.

**.** It should be noted that in an embodiment, the step of submitting 211 comprises a further step of verifying the pairing of the further candidate identification data and the electronic device associated with the candidate. Thereby, it is also verified during the submission step that the candidate has completed the examination on the electronic device assigned and delivered.

**.** Referring again in general to Figure 2, the method 200 further comprises a step of correcting 212, by the at least one first management computer 101, the written examinations submitted by assigning a respective evaluation to each examination.

**.** The method 200 further comprises a step of creating 213, by the at least one first management computer 101, a ranking of the selected candidates for the competition, examination and/or selection of personnel test based on the evaluation of the corrected examinations.

**.** The method 200 therefore comprises a symbolic step of ending ED.

**.** In an embodiment, not shown in the Figures, the step of delivering 211 the examination comprises steps of:
**.** - randomly selecting, by the at least one first management computer 101, such an examination from the available examinations;
. - - communicating, by the at least one first management computer 101, such information to all the electronic devices of the second plurality of electronic devices 103 assigned to the candidates.

. Furthermore, in an embodiment (not shown in the Figures), in conjunction with the previous one, the method comprises a step of sending, by the at least one first management computer 101 a plurality of queries of the selected examination, distributed following a different order for each electronic device of the electronic devices assigned to the candidates of the second plurality of electronic devices 103.

. Thereby, with a different order of queries in the examination, an additional feature is possible, adapted to reduce the possibility that nearby candidates can copy during the course of the exam.

. In a further embodiment, not shown in the Figures, in conjunction with any one of those described above, the step of correcting 212 comprises a step of assigning, by the at least one first management computer 101, the correction of the examinations, in a non-editable and anonymous format, to one or more members of a Competitive Exam Commission, in the case of an open-ended question examination.

. Furthermore, in an embodiment, the step of correcting 212 further comprises a step of assigning, by the at least one first management computer 101, the correction of a same open-ended question examination, in a non-editable and anonymous format, to several members of a Competitive Exam Commission so as to obtain a plurality of evaluations of the same open-ended question examination.

. In an embodiment, not shown in the Figures and alternative to the previous one, the step of correcting 212 is carried out automatically by the at least one first management computer 101 in the case of written closed-ended question examinations.

. In accordance with a further embodiment, alternatively or in conjunction with the previous one, the step of creating 213 comprises a step of assigning, by the at least one first management computer 101, to each commissioner of the Competitive Exam Commission, at least one coding key to be associated with the evaluation of the corrected examination.

**.** In an embodiment, if the same examination is corrected by more than one commissioner of the Competitive Exam Commission, the step of creating 213 comprises a step of assigning, by the at least one first management computer 101, several coding keys each assigned by the at least one first management computer 101 to a respective commissioner.

**.** In this embodiment, the step of creating 213 further comprises a step of decoding, by the at least one first management computer 101, the coded evaluation of each examination based on said one or more coding keys assigned to the respective commissioners, so as to associate the evaluation of the corrected examination with the respective candidate and draw up the related ranking.

**.** In an embodiment, not shown in the Figures, the step of scanning 204 comprises a step of sending, by the electronic device of the second plurality of electronic devices 103, the scanned invitation identification code to the at least one first management computer 101 for a check with the data stored therein, the at least one first management computer 101 being configured, in case of a positive outcome of the check of the received invitation identification code, to establish a unique pairing between the electronic device with which the identification code for the invitation of the candidate was scanned and the candidate him/herself.

**.** In an embodiment (not shown in the Figures), in conjunction with any one of those described above, the method 200 further comprises a step of assigning to a candidate, by the at least one first management computer 101, in a random manner, a station number in which to perform the examinations.

**.** In an embodiment (not shown in the Figures), in conjunction with any one of those described above, the method 200 comprises a step of identifying and selecting, by assigned personnel, through the at least one first management computer 101, characterizing elements of the competition, examination and/or selection of personnel test to be published.

**.** Examples of such characterizing elements have already been previously provided.

. According to a further embodiment, in combination with the previous one, the method 200 comprises a step of automatically creating, by the at least one first management computer 101, an announcement of a competition, examination and/or selection of personnel test based on data previously entered and stored in the at least one first management computer 101 by using predefined models/forms (the latter already described above).

. Furthermore, in one embodiment, in conjunction with the previous one, the method 200 further comprises a step of tracing, by the at least one first management computer 101, publication systems of the same announcement created automatically.

. In one embodiment, in conjunction with any one of those described above, the method 200 further comprises steps of:
- tracing, by the at least one first management computer 101, personal data of experts summoned to be part of the Selection Board and the possible acceptance of the role by them;
- providing, by the at least one first management computer 101, a Board Appointment function and creating access accounts of the Commissioner type for the members of the Selection Board in relation to the specific competition, examination and/or selection of personnel test.

. Furthermore, in a further embodiment, in conjunction with any one of those described above, the method 200 comprises steps of:
- viewing, by the members of the Selection Board, by using the at least one first management computer 101, the applications received, assessing the possession of the requirements requested in the announcement and choosing the admission or exclusion of the candidate to or from the competition, examination and/or selection of personnel test in progress;
- evaluating, by the members of the Selection Board by using the at least one first management computer 101, the qualifications held by each candidate, based on the provisions of the Announcement, assigning a related score;
- sending, by the at least one first management computer 101, to candidates who meet all the requirements set out in the announcement, a confirmation of participation in the competition, examination and/or selection of personnel test.

. The invitation identification code can be a security code of the OTP (One Time Password) type, a code of the QR (Quick Response) type, a code of the barcode type, and so on.

. In accordance with an embodiment (not shown in the Figures), in conjunction with any one of those described above, the method 200 further comprises, by the members of the Selection Board and/or of the Competitive Exam Commission, by means of the at least one first management computer 101, steps of:
- define the schedules of the examinations;
- communicate with the candidates, through push notifications, SMS notifications, e-mail notifications, for example;
- prepare questions, tests, queries, practical tests for the examinations.

. It should be noted that, as mentioned above, the at least one first management computer 101 is advantageously configured, through the back-office management application, to allow the members of the Selection Board and/or of the Competitive Exam Commission to work simultaneously on the same resource without interfering with one another (Collaboration).

. In particular, in an embodiment, the method 200 further comprises steps of:
- viewing, by the at least one first management computer 101, who is working on a resource, viewing the changes made by other members;
- updating, by the at least one first management computer 101, a resource with the changes saved by the other members after the last saving.

. In one embodiment, in conjunction with any one of those described above, the method 200 further comprises steps of:
- registering in advance, by a user by means of an electronic device of the first plurality of electronic devices 102, by entering data representative of the profile of the user, stored in the at least one first management computer 101, such as, for example: personal data, contact details, curriculum vitae, educational qualifications, scientific publications and qualifications, career qualifications and so on;
- uploading and/or sending, by a user by means of an electronic device of the first plurality of electronic devices 102, documents attached in a digital format to the at least one first management computer 101;
- sending, by the user by means of an electronic device of the first plurality of electronic devices 102, to the at least one first management computer 101, applications in digital format by the previously registered user, for the participation in one or more recruitment tests chosen from among those open, the announcements of which can be viewed, again through the user application, for example, by using, for this purpose, the representative data of the profile of the user previously stored in the at least one first management computer 101 (personal data, qualifications, curriculum vitae, and so on), possibly completing them and/or updating them, choosing whether to update the profile accordingly, or to insert representative data of the profile and documents in digital format to be associated only with the application being made (e.g., declaration of possession of specific requirements or qualifications required by the open announcement of a set competition, examination and/or selection of personnel test);
- sending, by a user by means of an electronic device of the first plurality of electronic devices 102, to the at least one first management computer 101 documents in digital format to be attached to the application.

. In this embodiment, following the conclusion of the application procedure, the method 200 further comprises a step of receiving, by the electronic device of the user through the user application, for example, from the at least one first management computer 101, notifications with the details of the application and the summary of what has been entered.

. Examples of such notifications have already been provided above.

. According to an embodiment, in conjunction with any one of those described above, not shown in the Figures, the method 200 comprises a step of providing, at the request of the candidate or, if necessary, for performing the examination, an electronic device of the second plurality of electronic devices 103 comprising an optical writing device (for example, an optical pen) which, by virtue of a character recognition system adapted to each type of exam, allows performing the examination as when writing on a sheet of paper.

**.** This technology is especially usable when the use of the keyboard could be an obstacle for some candidates or could be limiting for performing an examination which requires answers which use unconventional characters in a normal keyboard, such as highly specialized examinations in which the creation of a "graphic form" is required as an object of the evaluation, for example, and by virtue of an artificial intelligence. developed *ad hoc*, is able to automatically evaluate the result of the exam.

**.** Therefore, this technology allows performing the examination by a candidate for whom the keyboard is a technological barrier or simply finds it more comfortable to write using a pen instead of using the keyboard.

**.** In accordance with an embodiment, in conjunction with any one of those described above, not shown in the Figures, the method 200 comprises a step of obtaining, by the at least one first management computer 101, at the end of the correction of each examination, the identity of the candidate who performed the examination using the respective public encryption key, decrypting (deciphering) a data packet received from the electronic device of said second plurality of electronic devices 103, previously encrypted with the private encryption key associated with the candidate.

**.** In accordance with an embodiment, in conjunction with any one of the those previously described and not shown in the Figures, the method 200 comprises a step of providing a plurality of containers, for example bags, each delivered to a candidate after the scanning, by the electronic device of the second plurality of electronic devices 103 (during the so-called check-in step), of the invitation identification code presented by the candidate and received by the candidate him/herself at the time of the confirmation of participation in the competition, examination and/or selection of personnel test received from the at least one first management computer 101.

**.** Each container is adapted to accommodate therein the candidate's personal items which are not usable during the examination.

. Each container is adapted to be hermetically closed to prevent the ' items contained therein, for example cell phones, from being used.

. In addition, each container is configured to shield any data communication signal present outside the container, to temporarily isolate the items contained therein.

. The advantages of using a container for the personal items according to this embodiment have already been described above.

. As it can be seen, the object of the present invention is fully achieved since the method and the related system described allow preparing, performing and closing recruitment tests (for example, public competitions and other personnel selections) by using equipment, software and IT protocols, which ensure the security of the performance of the examinations (by using an unlock code and of a private encryption key for each candidate), the secrecy and certainty of the data processed, helping to speed up the operations relating to the competition, examination and/or selection of personnel test.

. The use of IT equipment and procedures helps to streamline and accelerate the preparation and performance of the various steps of the examination, with a view to Administrative Streamlining and Computerization of the Public Administration.

. Furthermore, the use of information technologies which ensure the encryption, secrecy and certainty of data and communications allows both complying with the transparency requirements of a competition, examination and/or selection of personnel test and providing evidence having the force of law in case of disputes and/or appeals.

, Furthermore, the method and the related system of the present invention intend to cover all the steps in which a competition, examination and/or selection of personnel test is divided, including cases in which not all the foreseen steps are performed, such as selections by qualifications only, selections for practical tests only, or even personnel selections by private subjects, for example, for which the tests are less rigid and binding than in public selections.

. Those skilled in the art can make changes and adaptations to the embodiments of the method and related system for managing a competition, examination and/or selection of personnel test described above or can replace elements with others which are functionally equivalent in order to meet contingent needs without departing from the scope of the appended claims. All the features described above as belonging to a possible embodiment can be implemented irrespective of the other embodiments described.

## Claims

1. A method (200) for managing a competition, examination and/or selection of personnel test, comprising steps of:
- sending (201) to at least one first management computer (101), by a first plurality of candidates, each provided with an electronic device of a first plurality of electronic devices (102), a plurality of applications for a competition, examination and/or selection of personnel test;
- selecting (202), by the at least one first management computer (101), a second plurality of candidates suitable for the competition, examination and/or selection of personnel test starting from said first plurality of candidates;
- sending (203), by the at least one first management computer (101), to each selected candidate, an identification code for the invitation to the competition, examination and/or selection of personnel test;
- scanning (204), for each selected candidate, by an electronic device of a second plurality of electronic devices (103) being associable with a respective candidate for the performance of examinations, the identification code for the invitation of the selected candidate;
- associating (205), for each selected candidate, by the at least one first management computer (101), the electronic device of the second plurality of electronic devices (103) used to scan the identification code for the invitation of the selected candidate with the selected candidate him/herself, the electronic device of the second plurality of electronic devices (103) being configured to perform an examination only following the insertion, by the candidate, of a respective unlock code, the electronic device of the second plurality of electronic devices (103) being associated with a respective Subscriber Identity Module, SIM, card to be operatively connected to the data communication network (NTW), the electronic device of said second plurality of electronic devices (102), being configured, through the respective SIM card, to generate a data communication logic layer of a private network in the data communication network (NTW) allowing a transmission of encrypted data by using a dedicated access point of the private type;
- generating (206), for each selected candidate, by the at least one first management computer (101), a private encryption key, the step of generating (206) comprising a step of inserting (207), by the at least, one first management computer (101), in the private encryption key generated for a selected candidate:
- a first identification code of the electronic device of said second plurality of electronic devices (103) associated with the selected candidate;
- a second identification code of the SIM card of the electronic device of said second plurality of electronic devices (103) associated with the selected candidate;,
- a third identification code of an examination assigned to the selected candidate;
- a fourth identification code of an electronic envelope assigned to the selected candidate;
- providing (208), by the at least one first management computer (101), an unlock code for the electronic devices of the second plurality of electronic devices (103) associated with the selected candidates;
- inserting (209), by each candidate, the unlock code in the assigned electronic device of the second plurality of electronic devices (103);
- performing (210), by each candidate, the examination by means of the respective assigned electronic device of the second plurality of electronic devices (103);
- submitting (211), by each candidate, by means of the respective assigned electronic device of the second plurality of electronic devices (103), the examination, providing both data representative of the answers to the written examinations of the candidate in a non-editable format, as well as data representative of the validation of the submission of the answers to the examination, the step of submitting (211) the examination occurring after enabling a data transmission by each electronic device of said second plurality of electronic devices (103) towards the at least one first management computer (101) through the private network logic layer which is obtainable by using each SIM card with which the electronic device of said second plurality of electronic devices (103) is provided;
- correcting (212), by the at least one first management computer (101), the written examinations submitted by assigning a respective evaluation to each examination;
- creating (213), by the at least one first management computer (101), a ranking of the selected candidates for the competition, examination and/or selection of personnel test based on the evaluation of the corrected examinations.

2. The method (200) according to claim 1, wherein the step of submitting (211) the examination comprises steps of:
- - randomly selecting, by the at least one first management computer (101), such an examination from the available examinations;
- - communicating, by the at least one first management computer (101), such information to all the electronic devices of the second plurality of electronic devices (103) assigned to the candidates.

3. The method (200) according to any one of the preceding claims, wherein the step of correcting (212) comprises a step of assigning, by the at least one first management computer (101), the correction of the examinations, in a non-editable and anonymous format, to one or more members of a Competitive Exam Commission, in the case of an open-ended question examination.

4. The method (200) according to any one of the preceding claims, wherein the step of correcting (212) further comprises a step of assigning, by the at least one first management computer (101), the correction of a same open-ended question examination, in a non-editable and anonymous format, to several members of a Competitive Exam Commission so as to obtain a plurality of evaluations of the same open-ended question examination.

5. The method (200) according to any one of claims 1 or 2, wherein the step of correcting (212) is carried out automatically by the at least one first management computer (101) in the case of written closed-ended question examinations.

6. The method (200) according to any one of the preceding claims, wherein the step of creating (213) comprises a step of assigning, by the at least one first management computer (101), to each commissioner of the Competitive Exam Commission, at least one coding key to be associated with the evaluation of the corrected examination.

7. The method (200) according to any one of the preceding claims, if the same examination is corrected by more than one commissioner of the Competitive Exam Commission, the step of creating (213) comprises a step of assigning, by the at least one first management computer (101), several coding keys each assigned to a respective commissioner.

8. The method (200) according to any one of claims 6 or 7, wherein the step of creating (213) further comprises a step of decoding, by the at least one first management computer (101), the coded evaluation of each examination based on said one or more coding keys assigned to the respective commissioners, so as to associate the evaluation of the corrected examination with the respective candidate and draw up the related ranking.

9. The method (200) according to any one of the preceding claims, wherein the step of scanning (204) comprises a step of sending, by the electronic device of the second plurality of electronic devices (103), the scanned invitation identification code to the at least one first management computer (101) for a check with the data stored therein, the at least one first management computer (101) being configured, in case of a positive outcome of the check of the received invitation identification code, to establish a unique pairing between the electronic device with which the identification code for the invitation of the candidate was scanned and the candidate him/herself.

10. The method (200) according to any one of the preceding claims, further comprising a step of assigning to a candidate, by the at least one first management computer (101), in a random manner, a station number in which to perform the examinations.

11. The method (200) according to any one of the preceding claims, comprising a step of detecting at regular or irregular time intervals, by the respective electronic device of the second plurality of electronic devices (103) assigned to a candidate, a further candidate identification data so as to verify the coupling between the electronic device and the candidate, the step of submitting (211) comprising a further step of verifying the pairing of the further candidate identification data and the electronic device associated with the candidate.

12. The method (200) according to any one of the preceding claims 10 or 11, further comprising steps of:
- assigning to each candidate, at the time of the delivery of the respective electronic device, the further candidate identification data and an identification code of an assigned seat, both stored in the electronic device delivered;
- scanning, by the user by means of the electronic device delivered belonging to the second plurality of electronic devices (103), an identification code of the seat applied to the seat;
- checking, by the electronic device delivered belonging to the second plurality of electronic devices (103), the correspondence between the identification code of the scanned seat and the identification code of a previously stored seat;
- if the correspondence is successful, enabling, by the at least one first management computer (101), the electronic device delivered for the insertion, through the examination performance application, of the unlock code for viewing the examination.

13. The method (200) according to any one of the preceding claims, comprising a step of providing, at the request of the candidate or, if necessary, for performing the examination, an electronic device of the second plurality of electronic devices (103) comprising an optical writing device which, by virtue of a character recognition system adapted to each type of exam, allows performing the examination as when writing on a sheet of paper.

14. The method (200) according to any one of the preceding claims, comprising a step of obtaining, by the at least one first management computer (101), at the end of the correction of each examination, the identity of the candidate who performed the examination using the respective public encryption key, decrypting a data packet received from the electronic device of said second plurality of electronic devices (103), previously encrypted with the private encryption key associated with the candidate.

15. A method (200) according to any one of the preceding claims, comprising a step of providing a plurality of containers, each delivered to a candidate following the scanning by the electronic device of the second plurality of electronic devices (103) of the invitation identification code presented by the candidate and received by the candidate him/herself at the time of the confirmation of participation in the competition, examination and/or selection of personnel test, received by at least one first management computer (101), each container being adapted to accommodate therein the candidate's personal items which are not usable during the examination, each container being adapted to be hermetically closed to prevent the items contained therein from being used, each container being configured to shield any data communication signal present outside the container to temporarily isolate the items contained therein.

16. A system (100) for managing a competition, examination and/or selection of personnel test, comprising:
- at least one first management computer(101);
- a first plurality of electronic devices (102), each being associable with a user, operatively connected to the at least one first management computer (101), the first plurality of electronic devices (102) being operatively connected to the at least one first management computer (101) through a data communication network (NTW) with related security communication protocols;
- a second plurality of electronic devices (103), each being associable with a candidate participating in the examinations, operatively connected to the at least one first management computer (101), the second plurality of electronic devices (103) being operatively connected to the at least one first management computer (101) through a data communication network (NTW) with related security communication protocols,
the system (100) being configured with program codes to carry out the method for managing a competition, examination and/or selection of personnel test in accordance with any one of the preceding claims.
